# EUROPEAN PATENT SPECIFICATION

(11) **EP 4 647 243 B1**
(45) Date of publication and mention of the grant of the patent: **11.11.2026**
(21) Application number: 23914135.1
(22) Date of filing: 20.02.2023
(51) Int. Cl.: B29C 64/245, B29C 64/118, B29C 64/20, B29C 64/295, B33Y 30/00

(54) **HEATED-BED DEFORMATION TOLERANCE STRUCTURE FOR LARGE-SIZED CONTINUOUS FIBER HIGH-TEMPERATURE 3D PRINTER**
WÄRMEBETTDEFORMATIONSTOLERANZSTRUKTUR FÜR EINEN GROSSEN KONTINUIERLICHEN FASERHOCHTEMPERATUR-3D-DRUCKER
STRUCTURE DE TOLÉRANCE À LA DÉFORMATION DE LIT CHAUFFÉ POUR IMPRIMANTE 3D À HAUTE TEMPÉRATURE À FIBRE CONTINUE DE GRANDE TAILLE

(30) Priority: 05.01.2023 CN 202310011189
(43) Date of publication of application: 12.11.2025
(73) Proprietor: Nanjing University of Aeronautics and Astronautics, Nanjing, Jiangsu 210016 (CN)
(72) Inventor: CHEN, Yiwei, Nanjing, Jiangsu 210016 (CN); ZHANG, Hao, Nanjing, Jiangsu 210016 (CN); SHAN, Zhongde, Nanjing, Jiangsu 210016 (CN); FAN, Congze, Nanjing, Jiangsu 210016 (CN); SONG, Wenzhe, Nanjing, Jiangsu 210016 (CN); ZHENG, Jinghua, Nanjing, Jiangsu 210016 (CN)
(74) Representative: Proi World Intellectual Property GmbH
(86) International application number: PCT/CN2023/077083
(87) International publication number: WO 2024/145980

(56) References cited:
- CN-A- 108 859 106
- CN-A- 111 936 300
- CN-A- 112 223 741
- CN-A- 112 571 797
- CN-U- 204 532 553
- CN-U- 217 098 927
- KR-A- 20220 036 205
- US-A1- 2017 313 049

## Description

### TECHNICAL FIELD

The present invention relates to the field of additive manufacturing technologies, and specifically to a hot bed deformation tolerance structure for a large-sized continuous fiber high-temperature 3D printer.

### BACKGROUND

A 3D printing technology for continuous fiber reinforced thermoplastic composites introduces continuous fibers as a reinforcing phase, which can significantly improve mechanical properties of printed parts. However, because the 3D printing technology implements forming by stacking multiple layers of materials, warping and layering often occur during printing. The introduction of continuous fibers improves the mechanical properties of parts in the fiber direction, but weakens interlayer properties to some extent, exacerbates the anisotropy of the mechanical properties of 3D printed parts, and limits the application of the 3D printing technology for continuous fiber reinforced thermoplastic composites in key fields such as aerospace and national defense.

At present, chamber preheating is usually used to reduce a temperature difference between a printing environment and an extruded material when polyether-ether-ketone, polyether-ketone-ketone, polyphenylene sulfide, and other high-performance semi-crystalline polymers are printed. However, when a motion mechanism of a 3D printing device works in a high-temperature environment, motion modules have thermal deformation and assembly deformation. Especially for a large-sized continuous fiber high-temperature 3D printer, a high-temperature hot bed supported by a Z axis has horizontal deformation in X and Y directions during moving, resulting in deformation and jamming of a printer actuation module.

US 2017/313049 A1 discloses the features of the preamble of claim 1.

### SUMMARY

To solve the above problems, the present invention discloses a hot bed deformation tolerance structure for a large-sized continuous fiber high-temperature 3D printer, which compensates for size changes caused by thermal expansion of a hot bed through motion coordination of a secured hot bed support assembly and a motion device, especially for an aluminum alloy material having a large size and a high thermal expansion coefficient.

Further, a Z-direction motion structure of this structure is fixedly mounted with a frame and works at room temperature.

Further, a compensation motion module is fixedly mounted with a Z axis and incompletely secured with the hot bed support assembly, and works at room temperature with the Z axis.

Further, the hot bed support assembly is incompletely secured and partially in a high-temperature chamber, with a maximum working temperature of 300°C. The hot bed support assembly retains motion redundancy in a direction of thermal expansion deformation, tolerates thermal deformation through a linear motion module, and compensates for metal deformation through horizontal motion coordination.

Further, the hot bed support assembly retains motion redundancy as follows: one corner of the hot bed is secured, the thermal deformation in an X-axis direction is compensated through the linear motion module, and after the high-temperature chamber is heated, the thermal deformation in the X-axis direction can drive the linear motion module to move, so as to prevent Z-axis deformation and jamming.

Further, the thermal deformation in a Y-axis direction is compensated through a linear motion module, following the same principle as the X-axis compensation method.

Further, the thermal deformation compensation method is mechanical passive compensation, which can adapt to thermal deformation at different temperatures without monitoring or structural modification for different temperatures. Meanwhile, the structure is also suitable for contraction compensation in low-temperature environments.

The hot bed deformation tolerance structure for the large-sized continuous fiber high-temperature 3D printer is different from the conventional rigid securing method for a hot bed. The structure of the present invention adopts incomplete securing to implement motion compensation for thermal deformation and assembly deformation.

As mentioned above, when a motion mechanism of a 3D printing device works in a high-temperature environment, motion modules have thermal deformation. Especially for a large-sized continuous fiber high-temperature 3D printer, a high-temperature hot bed supported by a Z axis has horizontal deformation in X and Y directions during moving, resulting in deformation and jamming of a printer actuation module.

A hot bed deformation tolerance structure for a large-sized continuous fiber high-temperature 3D printer is designed to compensate for size changes caused by thermal expansion of a hot bed through motion coordination of a secured hot bed support assembly and a motion device, especially for an aluminum alloy material having a large size and a high thermal expansion coefficient.

Meanwhile, the compensation method of the present invention is mechanical passive compensation, which can adapt to thermal deformation at different temperatures without monitoring or structural modification for different temperatures. In addition, the structure is also suitable for contraction compensation in low-temperature environments and non-parallel problems of motion modules caused by assembly.

This patent compensates for the thermal expansion and contraction of an internal high-temperature chamber through the assembly motion coordination of an external motion mechanism.

### BRIEF DESCRIPTION OF THE DRAWINGS

FIG. 1 is an overall structural design diagram of a large-sized continuous fiber high-temperature 3D printer;
FIG. 2 is a design diagram of a hot bed deformation tolerance structure for a large-sized continuous fiber high-temperature 3D printer;
FIG. 3 is a schematic structural diagram of a compensation motion module;
FIG. 4 is a schematic structural diagram of a limit motion module; and
FIG. 5 is a schematic structural diagram of a hot bed support assembly.

### DETAILED DESCRIPTION OF THE EMBODIMENTS

The present invention will be further illustrated below in conjunction with the drawings and specific embodiments. It should be understood that the following specific embodiments are only used to illustrate the present invention and not to limit the scope of the present invention. It should be noted that the terms "front", "back", "left", "right", "upper", and "lower" used in the following description refer to the directions in the accompanying drawings, and the terms "inside" and "outside" refer to the directions towards or away from the geometric center of a specific component respectively.

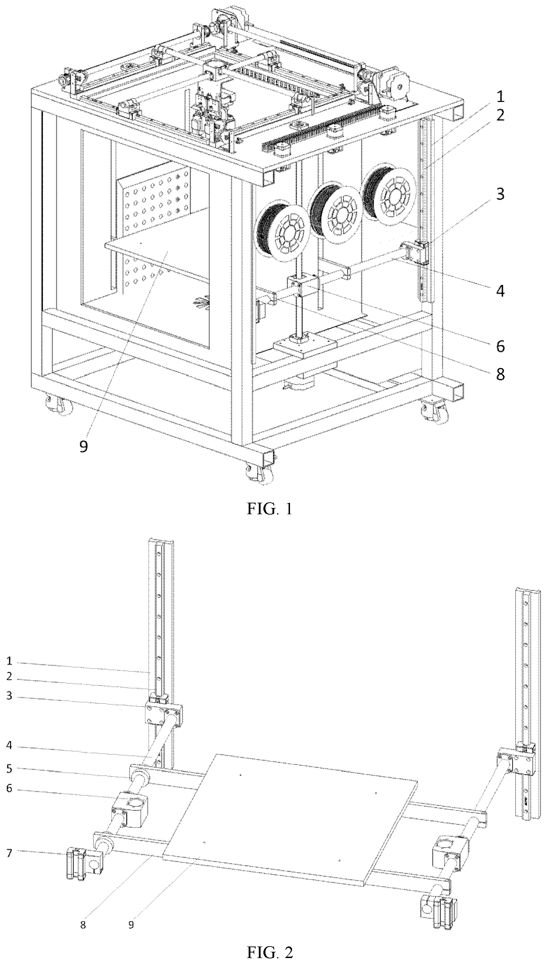

FIG. 1 is an overall structural design diagram of a large-sized continuous fiber high-temperature 3D printer. FIG. 2 is a design diagram of a hot bed deformation tolerance structure for a large-sized continuous fiber high-temperature 3D printer, including a linear guide rail mounting plate 1, a linear guide rail 2, a compensation motion module 3, a polished shaft 4, a polished shaft limit ring 5, a Z-axis lifting motion module 6, a limit motion module 7, a hot bed support assembly 8, and a hot bed 9.

In this embodiment, the linear guide rail mounting plate 1, the linear guide rail 2, the compensation motion module 3, the polished shaft 4, the polished shaft limit ring 5, the Z-axis lifting motion module 6, and the limit motion module 7 work at room temperature; the hot bed support assembly 8 is partially in a 300°C high temperature environment; and the hot bed 9 is in a 300°C high temperature environment. The hot bed support assembly 8 and the hot bed 9 have thermal deformation in heating and cooling processes.

In this embodiment, the hot bed support assembly 8 and the hot bed 9 are made of aluminum alloy, and the hot bed has a size of 800 mm × 800 mm. The aluminum alloy has a known thermal conductivity of 23.6E-6/K, and the thermal deformation of the aluminum alloy hot bed 9 is about 5.664 mm by calculation. The hot bed support assembly 8 has a size of 1000 mm in a high-temperature chamber and a thermal deformation of about 7.08 mm.

As shown in FIG. 2, the connection between the limit motion module 7 and the polished shaft 4 is fixed; and the connection between the compensation motion module 3 and the polished shaft 4 is not fixed. The polished shaft 4 is inserted into a linear bearing of the compensation motion module 3 and can move axially.

In this embodiment, the linear guide rail mounting plate 1 and the linear guide rail 2 are mounted on a printer frame to guide Z-direction motion of the modules, so as to ensure vertical motion precision.

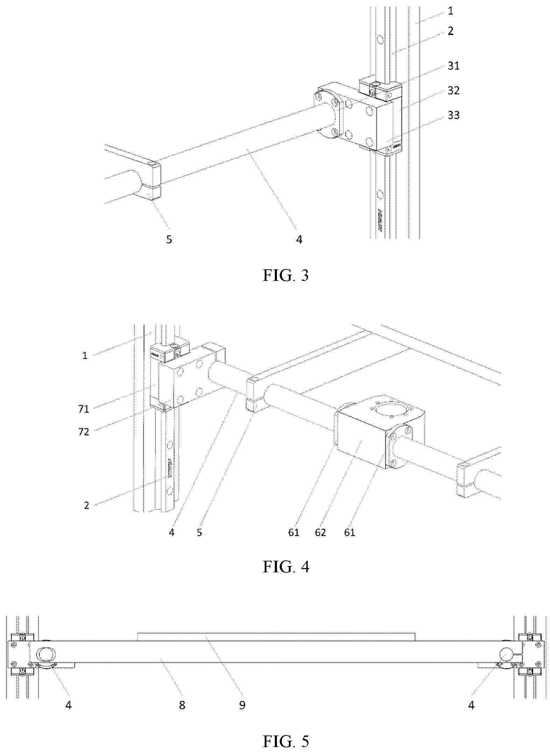

In this embodiment, the compensation motion module 3 is composed of a second polished shaft flange linear bearing 31, a second linear motion slider 32, and a second connecting block 33, as shown in FIG. 3. When moving vertically in a Z direction, the polished shaft 4 can move axially within the second polished shaft flange linear bearing 31 to prevent thermal deformation, cold deformation, and deformation and jamming of the motion modules due to non-parallel mounting of the linear guide rail mounting plate 1 and the linear guide rail 2.

The second linear bearing 31 is a type of bearing that can slide linearly and can slide axially along the polished shaft 4. The axial movement of the polished shaft 4 within the second linear bearing 31 is mainly for compensating for motion errors caused by Z-axis thermal deformation, cold deformation, and non-parallel assembly.

In this embodiment, the polished shaft 4 is connected to the compensation motion module 3, the polished shaft limit ring 5, the Z-axis lifting motion module 6, and the limit motion module 7, where the compensation motion module 3 and the Z-axis lifting motion module 6 can move axially along the polished shaft; and the Z-axis lifting motion module 6 and the limit motion module 7 are fixedly connected to the polished shaft for limit.

In this embodiment, the polished shaft limit ring 5 is used for limiting the axial movement of the hot bed support assembly 8 along the polished shaft, the polished shaft 4 is in clearance fit with the hot bed support assembly 8, and the polished shaft limit ring 5 is in clearance fit with the hot bed support assembly 8. When thermal deformation, cold deformation, and assembly deformation occur, the hot bed support assembly 8 can extend or retract in a length direction to prevent deformation and jamming of the motion modules.

In this embodiment, the Z-axis lifting motion module 6 is composed of a first polished shaft flange linear bearing 61 and a first connecting block 62. The first connecting block 62 can be driven to move in the Z direction by mounting a T-shaped screw or a ball screw on the first connecting block 62. Meanwhile, the first connecting block 62 can move axially along the first polished shaft flange linear bearing 61 to prevent motion jamming caused by axial deformation.

In this embodiment, the limit motion module 7 is composed of a third linear motion slider 71 and a third connecting block 72, and is used for securing the polished shaft 4 and driving the polished shaft 4 to move vertically in the Z direction when moving vertically in the Z direction, as shown in FIG. 4.

In this embodiment, one end of the hot bed support assembly 8 is rigidly connected to the polished shaft for positioning, and the other end is provided with a slot hole. The polished shaft limit ring 5 limits the hot bed support assembly 8 to move axially along the polished shaft 4, and the hot bed support assembly 8 can also move in a length direction of the slot hole, thereby compensating for thermal deformation, cold deformation, and assembly deformation of the hot bed and preventing deformation and jamming of the motion modules.

In this embodiment, the hot bed 9 is rigidly secured to the hot bed support assembly 8, is a part forming platform in a 3D printing process, and can move freely in the vertical direction along the Z axis.

## Claims

1. A hot bed deformation tolerance structure for a large-sized continuous fiber high-temperature 3D printer, comprising a hot bed (9), wherein the hot bed (9) is arranged on a hot bed support assembly (8); **characterized in that** a polished shaft (4) is connected to each of two sides of the hot bed support assembly (8); the polished shaft (4) on one side is rigidly connected to the hot bed support assembly (8), and a polished shaft limit ring (5) is arranged on the polished shaft (4) on the other side that is in clearance fit with the hot bed support assembly (8); a compensation motion module (3) is connected to one end of each of the polished shafts (4), and a limit motion module (7) is connected to the other end of the polished shaft (4); the compensation motion module (3) is in sliding fit with a linear slide rail (2); a Z-axis lifting motion module (6) is arranged on the polished shaft (4); and the polished shaft limit ring (5) is in clearance fit with the hot bed support assembly (8).

2. The hot bed deformation tolerance structure for a large-sized continuous fiber high-temperature 3D printer according to claim 1, wherein the Z-axis lifting motion module (6) is composed of a first polished shaft flange linear bearing (61) and a first connecting block (62), and the first connecting block (62) can be driven to move in a Z direction by mounting a T-shaped screw or a ball screw on the first connecting block (62); and the first connecting block (62) can also move axially along the first polished shaft flange linear bearing (61) to prevent motion jamming caused by axial deformation.

3. The hot bed deformation tolerance structure for a large-sized continuous fiber high-temperature 3D printer according to claim 1, wherein the compensation motion module (3) is composed of a second polished shaft flange linear bearing (31), a second linear motion slider (32), and a second connecting block (33); and when moving vertically in the Z direction, the polished shaft (4) can move axially within the second polished shaft flange linear bearing (31) to prevent thermal deformation and cold deformation.

4. The hot bed deformation tolerance structure for a large-sized continuous fiber high-temperature 3D printer according to claim 1, wherein the limit motion module (7) is composed of a third linear motion slider (71) and a third connecting block (72), and is used for securing the polished shaft (4) and driving the polished shaft (4) to move vertically in the Z direction when moving vertically in the Z direction; and the third linear motion slider (71) is in sliding fit with the linear slide rail (2).

5. The hot bed deformation tolerance structure for a large-sized continuous fiber high-temperature 3D printer according to claim 1, wherein the hot bed support assembly (8) and the hot bed (9) are made of aluminum alloy.

6. The hot bed deformation tolerance structure for a large-sized continuous fiber high-temperature 3D printer according to claim 1, wherein the hot bed support assembly (8) and the hot bed (9) are made of aluminum alloy.

## Patentansprüche

1. Eine Struktur zur Tolerierung von Verformungen des Heizbetts für einen großformatigen 3D-Drucker mit Endlosfasern und Hochtemperaturbetrieb, umfassend ein Heizbett (9), wobei das Heizbett (9) auf einer Heizbett-Trägerbaugruppe (8) angeordnet ist; eine polierte Welle (4) ist mit jeder der beiden Seiten der Heizbett-Trägerbaugruppe (8) verbunden; die polierte Welle (4) auf einer Seite starr mit der Heizbett-Trägerbaugruppe (8) verbunden ist und auf der polierten Welle (4) auf der anderen Seite, die in einer Spielpassung mit der Heizbett-Trägerbaugruppe (8) steht, ein Begrenzungsring (5) für die polierte Welle angeordnet ist; ein Ausgleichsbewegungsmodul (3) ist mit einem Ende jeder der polierten Wellen (4) verbunden, und ein Begrenzungsbewegungsmodul (7) ist mit dem anderen Ende der polierten Welle (4) verbunden; das Ausgleichsbewegungsmodul (3) steht in einer Gleitpassung mit einer linearen Führungsschiene (2); ein Z-Achsen-Hubbewegungsmodul (6) ist an der polierten Welle (4) angeordnet; und der Begrenzungsring (5) der polierten Welle steht in einer Spielpassung mit der Heizbett-Trägerbaugruppe (8).

2. Struktur zur Tolerierung von Verformungen des Heizbetts für einen großformatigen 3D-Drucker mit Endlosfasern und Hochtemperaturbetrieb gemäß Anspruch 1, wobei das Z-Achsen-Hubbewegungsmodul (6) aus einem ersten Linearlager (61) mit poliertem Wellenflansch und einem ersten Verbindungsblock (62) besteht, und der erste Verbindungsblock (62) durch Anbringen einer T-förmigen Schraube oder einer Kugelumlaufspindel an dem ersten Verbindungsblock (62) in Z-Richtung bewegt werden kann; und der erste Verbindungsblock (62) sich zudem axial entlang des ersten Linearlagers mit poliertem Wellenflansch (61) bewegen kann, um ein durch axiale Verformung verursachtes Blockieren der Bewegung zu verhindern.

3. Die Struktur zur Tolerierung von Verformungen des Heizbetts für einen großformatigen 3D-Drucker mit Endlosfasern und Hochtemperaturbetrieb gemäß Anspruch 1, wobei das Ausgleichsbewegungsmodul (3) aus einem zweiten Linearlager mit poliertem Wellenflansch (31), einem zweiten Lineargleiter (32) und einem zweiten Verbindungsblock (33) besteht; und bei vertikaler Bewegung in Z-Richtung kann sich die polierte Welle (4) axial innerhalb des zweiten Linearlagers mit poliertem Wellenflansch (31) bewegen, um thermische Verformungen und Kaltverformungen zu verhindern.

4. Die Struktur zur Tolerierung von Verformungen des Heizbetts für einen großformatigen Hochtemperatur-3D-Drucker mit Endlosfasern gemäß Anspruch 1, wobei das Begrenzungsbewegungsmodul (7) aus einem dritten Lineargleiter (71) und einem dritten Verbindungsblock (72) besteht und dazu dient, die polierte Welle (4) zu sichern und die polierte Welle (4) bei einer vertikalen Bewegung in Z-Richtung so anzutreiben, dass sie sich vertikal in Z-Richtung bewegt; und der dritte Linearbewegungsschieber (71) in Gleitpassung mit der linearen Führungsschiene (2) steht.

5. Struktur zur Tolerierung von Verformungen des Heizbetts für einen großformatigen Hochtemperatur-3D-Drucker mit Endlosfasern gemäß Anspruch 1, wobei die Heizbett-Trägerbaugruppe (8) und das Heizbett (9) aus einer Aluminiumlegierung bestehen.

6. Struktur zur Tolerierung von Verformungen des Heizbetts für einen großformatigen Hochtemperatur-3D-Drucker mit Endlosfasern gemäß Anspruch 1, wobei die Heizbett-Trägerbaugruppe (8) und das Heizbett (9) aus einer Aluminiumlegierung bestehen.

## Revendications

1. Structure de tolérance de déformation du plateau chauffant pour une imprimante 3D à haute température à fibres continues de grande taille, comprenant un plateau chauffant (9), dans laquelle le plateau chauffant (9) est disposé sur un ensemble de support de plateau chauffant (8) ; un arbre poli (4) est relié à chacun des deux côtés de l'ensemble de support de plateau chauffant (8) ; l'arbre poli (4) d'un côté est relié de manière rigide à l'ensemble de support de plateau chauffant (8), et une bague de butée d'arbre poli (5) est disposée sur l'arbre poli (4) de l'autre côté, qui est en ajustement avec jeu avec l'ensemble de support de plateau chauffant (8) ; un module de mouvement de compensation (3) est relié à une extrémité de chacun des arbres polis (4), et un module de mouvement de butée (7) est relié à l'autre extrémité de l'arbre poli (4) ; le module de mouvement de compensation (3) est monté par glissement sur un rail de guidage linéaire (2) ; un module de mouvement de levage selon l'axe Z (6) est disposé sur l'arbre poli (4) ; et la bague de butée de l'arbre poli (5) est montée avec jeu sur l'ensemble de support du plateau chauffant (8).

2. Structure de tolérance à la déformation du lit chauffant pour une imprimante 3D à haute température à fibres continues de grande taille selon la revendication 1, dans laquelle le module de mouvement de levage selon l'axe Z (6) est composé d'un premier palier linéaire à bride d'arbre poli (61) et d'un premier bloc de liaison (62), et le premier bloc de liaison (62) peut être entraîné pour se déplacer dans la direction Z grâce au montage d'une vis en T ou d'une vis à billes sur le premier bloc de liaison (62) ; et le premier bloc de liaison (62) peut également se déplacer axialement le long du premier palier linéaire à bride pour arbre poli (61) afin d'empêcher tout blocage du mouvement causé par une déformation axiale.

3. Structure de tolérance à la déformation du plateau chauffant pour une imprimante 3D à haute température à fibres continues de grande taille selon la revendication 1, dans laquelle le module de mouvement de compensation (3) est composé d'un deuxième palier linéaire à bride d'arbre polie (31), d'un deuxième coulisseau de mouvement linéaire (32) et d'un deuxième bloc de liaison (33) ; et lors d'un déplacement vertical dans la direction Z, l'arbre poli (4) peut se déplacer axialement à l'intérieur du deuxième palier linéaire à bride d'arbre polie (31) afin d'empêcher toute déformation thermique et toute déformation à froid.

4. Structure de tolérance à la déformation du plateau chauffant pour une imprimante 3D à haute température à fibres continues de grande taille selon la revendication 1, dans laquelle le module de mouvement de limitation (7) est composé d'un troisième coulisseau à mouvement linéaire (71) et d'un troisième bloc de liaison (72), et sert à fixer l'arbre poli (4) et à entraîner l'arbre poli (4) pour qu'il se déplace verticalement dans la direction Z lors d'un déplacement vertical dans la direction Z ; et le troisième coulisseau à mouvement linéaire (71) est en ajustement glissant avec le rail de guidage linéaire (2).

5. Structure de tolérance à la déformation du plateau chauffant pour une imprimante 3D à haute température à fibres continues de grande taille selon la revendication 1, dans laquelle l'ensemble de support du plateau chauffant (8) et le plateau chauffant (9) sont réalisés en alliage d'aluminium.

6. Structure de tolérance à la déformation du plateau chauffant pour une imprimante 3D à haute température à fibres continues de grande taille selon la revendication 1, dans laquelle l'ensemble de support du plateau chauffant (8) et le plateau chauffant (9) sont réalisés en alliage d'aluminium.
